(19) **Europäisches Patentamt European Patent Office Office européen des brevets**

(11) **EP 1 986 126 B1**

(12) **FASCICULE DE BREVET EUROPEEN**

(45) Date de publication et mention de la délivrance du brevet:
**25.08.2010 Bulletin 2010/34**

(51) Int Cl.:
***G06K 9/00*** *(2006.01)*

(21) Numéro de dépôt: **08007158.2**

(22) Date de dépôt: **11.04.2008**

(54) **Procédé et dispositif de localisation d'un iris humain dans une image**

Lokalisierungsverfahren und -vorrichtung einer menschlichen Iris in einem Bild

Method and device for locating a human iris in an image

(84) Etats contractants désignés:
**DE FR GB IT**

(30) Priorité: **26.04.2007 FR 0703039**
**05.09.2007 FR 0706202**

(43) Date de publication de la demande:
**29.10.2008 Bulletin 2008/44**

(73) Titulaire: **STMicroelectronics Rousset SAS**
**13790 Rousset (FR)**

(72) Inventeurs:
• **Martin, Lionel**
**13790 Peynier (FR)**
• **Petit Jean, Guillaume**
**13100 Aix en Provence (FR)**

(74) Mandataire: **Marchand, André et al**
**OMNIPAT,**
**24 Place des Martyrs de la Résistance**
**13100 Aix-en-Provence (FR)**

(56) Documents cités:
**WO-A-2005/024708**

• **PAN LILI ET AL: "The Algorithm of Iris Image Preprocessing" AUTOMATIC IDENTIFICATION ADVANCED TECHNOLOGIES, 2005. FOURTH IEEE WORKSHOP ON BUFFALO, NY, USA 17-18 OCT. 2005, PISCATAWAY, NJ, USA,IEEE, 17 octobre 2005 (2005-10-17), pages 134-138, XP010856510 ISBN: 0-7695-2475-3**
• **W. YUAN ET AL.: "A rapid iris location method based on the structure of the human eye" PROC. OF THE 2005 IEEE ENGINEERING IN MEDICINE AND BIOLOGY, 1 septembre 2005 (2005-09-01), pages 3020-3023, XP002456333**
• **XIAOFU HE ET AL: "A Novel Iris Segmentation Method for Hand-Held Capture Device" ADVANCES IN BIOMETRICS LECTURE NOTES IN COMPUTER SCIENCE;LNCS, SPRINGER-VERLAG, BE, vol. 3832, 2005, pages 479-485, XP019026917 ISBN: 3-540-31111-4**
• **HANHO SUNG ET AL: "Iris recognition using collarette boundary localization" PATTERN RECOGNITION, 2004. ICPR 2004. PROCEEDINGS OF THE 17TH INTERNATIONAL CONFERENCE ON CAMBRIDGE, UK AUG. 23-26, 2004, PISCATAWAY, NJ, USA,IEEE, 23 août 2004 (2004-08-23), pages 857-860, XP010724055 ISBN: 0-7695-2128-2**

EP 1 986 126 B1

**Description**

La présente invention concerne le domaine du traitement d'images numériques, et plus particulièrement, les traitements appliqués à des images numériques de l' oeil humain dans des applications d'identification ou d'authentification.

La reconnaissance d'iris constitue une technique d'identification biométrique éprouvée, pourvu que l'image sur laquelle sont appliqués les traitements d'analyse et d'identification soit exploitable. En particulier, la performance des algorithmes de reconnaissance dépend fortement de la netteté de l'image de l'iris à identifier. Or, dans la plupart des applications, et notamment dans les applications dites "embarquées" (par exemple, pour du contrôle d'accès à un téléphone ou ordinateur portable, pour une clé électronique, etc.), la caméra (capteur numérique et lentille) utilisée ne dispose pas de dispositif d'autofocus ou de mise au point automatique, ajustant la focale en fonction de la distance.

De plus, pour obtenir une résolution suffisante de l'iris, les images sont prises à une distance relativement faible, généralement de l'ordre de 10 à 30 cm. Il en résulte une faible zone de netteté (plage de distance entre la caméra et l'oeil, dans laquelle l'image est nette). Cette faible profondeur de champ ajoutée au fait que l'oeil est sphérique peut engendrer des différences de netteté entre des zones d'une même image de l'oeil. L'utilisateur doit être très coopératif en se plaçant dans une zone de netteté relativement réduite. Généralement, l'utilisateur bouge pour se placer à une distance de netteté.

En pratique, les images issues de systèmes d'acquisition numériques courants présentent les défauts suivants :

- apparition de tâches blanches provenant de réflexions spéculaires de sources lumineuses sur les obstacles existants dans l'environnement d'acquisition (lunettes, optique du capteur, ...),
- flou dû à de faibles mouvements de l'oeil (la pupille et l'iris étant toujours visibles), et à la qualité optique du capteur,
- contours de zones de l'image (pupille/iris, iris/cornée) moins nets, dus à un défaut de mise au point, et à la faible profondeur de champ du système optique,
- les cils couvrent une partie de l'iris.

Lorsque les images sont de mauvaise qualité, les performances de certains procédés d'identification d'iris conventionnels peuvent diminuer, généralement en raison d'erreurs de localisation de l'iris.

Un mode de réalisation de l'invention propose d'améliorer la localisation d'iris, notamment pour rendre les algorithmes d'identification moins sensibles à la qualité des images.

Cet objectif est atteint par la prévision d'un procédé de localisation de l'iris dans une image d'un oeil, comprenant des étapes d'estimation du centre et du rayon de la pupille dans l'image, de détection de positions de sauts d'intensités de pixels situés sur une ligne passant sensiblement par le centre estimé de la pupille et des zones de transition entre l'iris et la cornée, de part et d'autre de la pupille, et de détermination du rayon d'un cercle centré sensiblement sur le centre estimé de la pupille et passant par les positions détectées des sauts d'intensité.

Un exemple de localisation de l'iris par détermination d'un contour circulaire est présenté par le document:

P. Lili, X. Mei: "The Algorithm of Iris Image Preprocessing",Fourth IEEE Workshop on Automatic Identification Advanced Technologies, 2005. Buffalo, NY, USA, 17 octobre 2005 (2005-10-17), pages 134-138, XP010856510 ISBN: 0-7695-2475-3

Selon un mode de réalisation, la détection des positions des transitions est effectuée en recherchant des positions où un filtre gradient appliqué entre deux fenêtres mobiles successives de type porte qui se chevauchent, aux intensités des pixels situés sur la ligne, présente localement un extrémum.

Selon un mode de réalisation, le rayon de l'iris est déterminé en calculant la distance entre la position du centre de la pupille et l'une des positions des sauts d'intensité sur la ligne, dans les zones de transition gauche et droite entre la cornée et l'iris.

Selon un mode de réalisation, les positions des sauts d'intensité sur la ligne dans les zones de transition gauche et droite entre la cornée et l'iris sont déterminées en recherchant deux positions où la valeur du filtre gradient présente localement un extremum.

Selon un mode de réalisation, le filtre gradient est calculé de la manière suivante :

$$G(m) = \frac{1}{\Delta x} \sum_{x \in \Pi_m} I(x) - \frac{1}{\Delta x} \sum_{x \in \Pi_{m-1}} I(x)$$

dans laquelle I représente l'intensité d'un pixel à la position x, m et m-1 représentent la position du centre des fenêtres mobiles de type porte $\Pi_m(x)$ et $\Pi_{m-1}(x)$, et $\Delta x$ représente la largeur des fenêtres mobile.

Selon un mode de réalisation, la largeur des fenêtres mobiles est égale à 16 pixels et le pas de déplacement des fenêtres mobiles est fixé à 4 pixels.

Selon un mode de réalisation, le rayon de l'iris est déterminé en recherchant les positions où le filtre gradient présente localement un extrémum dans les zones de transition entre l'iris et la cornée, en calculant les distances entre la position du centre de la pupille sur la ligne et les positions où le filtre gradient présente localement un extrémum, le rayon de l'iris étant estimé égal à la distance avec la position où la valeur du filtre gradient est la plus élevée en valeur absolue si les distances sont proches, et sinon le rayon de l'iris est estimé égal à l'une des distances avec la position où la valeur du filtre gradient est la plus faible en valeur absolue.

Selon un mode de réalisation, la position du centre et la valeur du rayon de l'iris sont affinées par un opérateur intégro-différentiel appliqué à la position du centre de la pupille et une valeur estimée du rayon de l'iris.

Selon un mode de réalisation, la localisation de la pupille est effectuée par une segmentation de l'image, pour délimiter le contour de la pupille, suivie d'une estimation du centre de la pupille par un calcul de centre géométrique du contour de la pupille.

Selon un mode de réalisation, le rayon Rp de la pupille est obtenu par l'expression suivante :

$$Rp = max(w, h)$$

où $w = \left(\dfrac{4}{\pi}\right)^{\frac{1}{4}} \left(\dfrac{\phi_2^3}{\phi_1}\right)^{\frac{1}{8}}$ et $h = \left(\dfrac{4}{\pi}\right)^{\frac{1}{4}} \left(\dfrac{\phi_1^3}{\phi_2}\right)^{\frac{1}{8}}$

avec $\phi_1 = \sum_{ROIP}(x - \hat{x})^2$ et $\phi_2 = \sum_{ROIP}(y - \hat{y})^2$

x, y étant les coordonnées des pixels dans la zone de recherche ROIP, et $\hat{x}, \hat{y}$ étant les coordonnées du centre de la pupille.

Selon un mode de réalisation, la valeur du rayon de la pupille est affinée par un opérateur intégro-différentiel.

Selon un mode de réalisation, le procédé comprend une étape de prétraitement effectuant un filtrage des intensités des pixels de l'image pour éliminer les cils sur la cornée et l'iris, ainsi que les reflets sur la pupille.

Selon un mode de réalisation, le filtrage effectué durant l'étape de prétraitement applique aux intensités des pixels de l'image des opérations de fermeture et d'ouverture morphologiques.

Selon un mode de réalisation, l'étape de prétraitement comprend l'application d'un traitement de rehaussement de contraste aux intensités des pixels de l'image.

Selon un mode de réalisation, le rehaussement de contraste est effectué uniquement sur une zone de l'image dans laquelle la pupille est supposée se trouver.

L'invention concerne également un dispositif de localisation de l'iris dans une image d'un oeil, configuré pour estimer le centre et du rayon de la pupille dans l'image, détecter des positions de sauts d'intensités de pixels situés sur une ligne passant sensiblement par le centre estimé de la pupille et des zones de transition entre l'iris et la cornée, de part et d'autre de la pupille, et déterminer le rayon d'un cercle centré sensiblement sur le centre estimé de la pupille et passant par les positions détectées des sauts d'intensité.

Selon un mode de réalisation, le dispositif est configuré pour détecter les positions des transitions en recherchant des positions où un filtre gradient appliqué entre deux fenêtres mobiles successives de type porte qui se chevauchent, aux intensités des pixels situés sur la ligne, présente localement un extrémum.

Selon un mode de réalisation, le dispositif est configuré pour déterminer le rayon de l'iris en calculant la distance entre la position du centre de la pupille sur la ligne et l'une des positions des sauts d'intensité sur la ligne, dans les zones de transition gauche et droite entre la cornée et l'iris.

Selon un mode de réalisation, le dispositif est configuré pour déterminer les positions des sauts d'intensité sur la ligne dans les zones de transition gauche et droite entre la cornée et l'iris en recherchant deux positions où la valeur du filtre gradient présente localement un extremum.

Selon un mode de réalisation, le dispositif est configuré pour calculer le filtre gradient de la manière suivante :

$$G(m) = \frac{1}{\Delta x}\sum_{x \in \Pi_m} I(x) - \frac{1}{\Delta x}\sum_{x \in \Pi_{m-1}} I(x)$$

dans laquelle I représente l'intensité d'un pixel à la position x, m et m-1 représentent la position du centre des fenêtres mobiles de type porte $\Pi m(x)$ et $\Pi_{m-1}(x)$, et $\Delta x$ représente la largeur dès fenêtres mobile.

Selon un mode de réalisation, la largeur des fenêtres mobiles est égale à 16 pixels et le pas de déplacement des fenêtres mobiles est fixé à 4 pixels.

Selon un mode de réalisation, le dispositif est configuré pour déterminer le rayon de l'iris en recherchant les positions où le filtre gradient présente localement un extrémum dans les zones de transition entre l'iris et la cornée, en calculant les distances entre la position du centre de la pupille sur la ligne et les positions où le filtre gradient présente localement un extrémum, le rayon de l'iris étant estimé égal à la distance avec la position où la valeur du filtre gradient est la plus élevée en valeur absolue si les distances sont proches, et sinon le rayon de l'iris est estimé égal à la distance avec la position où la valeur du filtre gradient est la plus faible en valeur absolue.

Selon un mode de réalisation, le dispositif est configuré pour affiner la position du centre et la valeur du rayon de l'iris par un opérateur intégro-différentiel appliqué à la position du centre de la pupille et une valeur estimée du rayon de l'iris.

Selon un mode de réalisation, le dispositif est configuré pour localiser la pupille par une segmentation de l'image, pour délimiter le contour de la pupille, puis estimer le centre de la pupille par un calcul de centre géométrique du contour de la pupille.

Selon un mode de réalisation, le dispositif est configuré pour calculer le rayon Rp de la pupille par l'expression suivante :

$$Rp = \max(w, h)$$

où $w = \left(\dfrac{4}{\pi}\right)^{1/4}\left(\dfrac{\phi_2^3}{\phi_1}\right)^{1/8}$ et $h = \left(\dfrac{4}{\pi}\right)^{1/4}\left(\dfrac{\phi_1^3}{\phi_2}\right)^{1/8}$

avec $\phi_1 = \sum_{ROIP}(x - \hat{x})^2$ et $\phi_2 = \sum_{ROIP}(y - \hat{y})^2$

x, y étant les coordonnées des pixels dans la zone de recherche ROIP, et $\hat{x}, \hat{y}$ étant les coordonnées du centre de la pupille.

Selon un mode de réalisation, le dispositif est configuré pour affiner la valeur du rayon de la pupille par un opérateur intégro-différentiel.

Selon un mode de réalisation, le dispositif est configuré pour prétraiter l'image en effectuant un filtrage des intensités des pixels de l'image pour éliminer les cils sur la cornée et l'iris, ainsi que les reflets sur la pupille.

Selon un mode de réalisation, le filtrage est effectué en appliquant aux intensités des pixels de l'image des opérations de fermeture et d'ouverture morphologiques.

Selon un mode de réalisation, le prétraitement de l'image est effectué en appliquant un traitement de rehaussement de contraste aux intensités des pixels de l'image.

Selon un mode de réalisation, le dispositif est configuré pour rehausser le contraste de l'image uniquement dans une zone de l'image dans laquelle la pupille est supposée se trouver.

Des exemples de réalisation de l'invention seront décrits dans ce qui suit, à titre non limitatif en relation avec les figures jointes parmi lesquelles :

- la figure 1 représente sous forme de blocs un système de reconnaissance d'iris,
- la figure 2 représente sous forme de blocs des modules du système de reconnaissance d'iris, selon un mode de réalisation de l'invention,
- les figures 3a et 3b sont des images illustrant un prétraitement effectué par un module représenté sur la figure 2,
- la figure 4 représente une courbe de rehaussement de contraste utilisée par le module de prétraitement,
- les figures 5a et 5b sont des images illustrant un procédé de localisation du contour de l'iris, selon l'invention
- la figure 6 représente une courbe de variation d'intensité de pixels de l'image le long d'un axe passant par la pupille,
- la figure 7 représente une courbe de variation d'énergie de composantes hautes fréquences du spectre de Fourier de la courbe de la figure 6, et
- la figure 8 représente une courbe résultant de l'application d'un filtre gradient à la courbe de la figure 6.

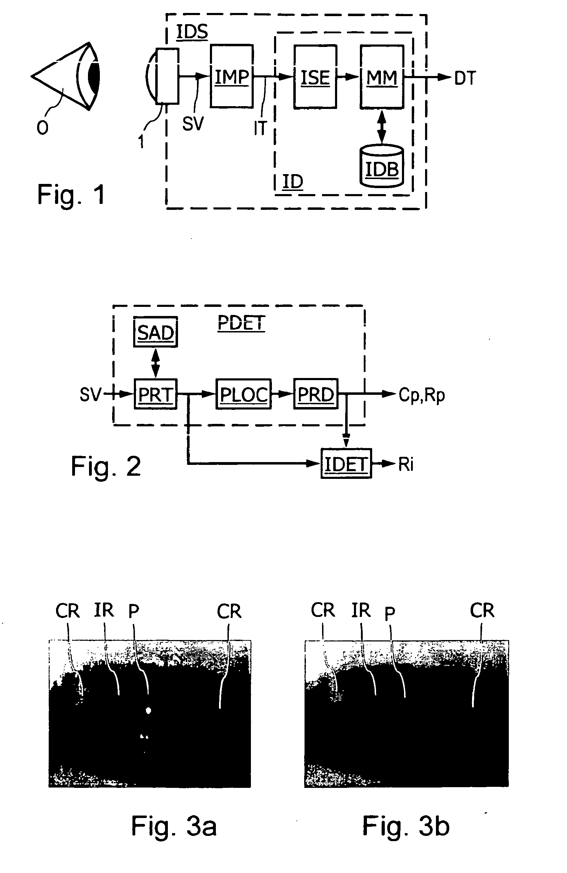

La figure 1 représente un système de reconnaissance d'iris IDS. Le système IDS est destiné à exploiter des images d'oeil pour effectuer une identification ou authentification par reconnaissance iridienne. A cet effet, le système IDS comprend un capteur d'image numérique 1, un module de sélection d'image IMP, et un module de reconnaissance d'iris ID. Le capteur d'images acquiert une séquence de trames vidéo ou d'images numériques SV d'un oeil O d'un utilisateur. Le module de sélection d'image IMP analyse en temps réel chaque trame ou image de la séquence d'images SV et sélectionne des images IT de la séquence SV ayant une qualité suffisante pour effectuer une localisation de l'iris et une identification de l'utilisateur.

Le module de reconnaissance d'iris ID utilise les images sélectionnées IT pour reconnaître les images d'iris. Le module ID comprend classiquement un module d'extraction de signature d'iris ISE, et un module de comparaison MM connecté à une base de données de signatures d'iris IDB. Le module d'extraction ISE extrait une signature d'iris des images sélectionnées par le module IMP. Le module de comparaison MM recherche si la signature d'iris fournie par le module ISE se trouve dans la base donnée IDB. Le module MM fournit un signal de détection DT indiquant si oui ou non l'iris de l'utilisateur a été reconnu.

Par souci de clarté, seuls les modules ou étapes qui sont utiles à la compréhension de l'invention ont été représentés dans les figures et seront décrits par la suite. En particulier, les traitements de calcul de signature d'iris effectués par le module ISE et de reconnaissance d'iris effectués par le module MM n'ont pas été détaillés. D'une manière générale, le procédé d'extraction d'iris selon l'invention est compatible avec toute exploitation d'images d'iris. De même, le mode d'obtention des images à traiter par le procédé selon l'invention n'a pas été détaillé, l'invention étant là encore compatible avec n'importe quelle image numérique d'oeil, en niveau de gris ou en couleur.

Par ailleurs, dans la description qui suit, on entendra par intensité d'un pixel le niveau de gris ou la luminance du pixel.

La figure 2 représente un mode de réalisation selon l'invention de modules de localisation des contours de la pupille PDET et de l'iris IDET. Le module de localisation de la pupille PDET fait partie du module de sélection d'image IMP. Le module de localisation de l'iris IDET fournit au module d'extraction de signature d'iris ISE le centre et les rayons des contours interne (rayon de la pupille) et externe de l'iris dans les images sélectionnées IT de la séquence SV.

Le module PDET comprend un module de prétraitement PRT, un module de délimitation d'une zone de recherche de la pupille SAD, un module de localisation de la pupille PLOC, et un module d'affinage PRD de la valeur du rayon Rp de la pupille.

Le module PRT applique un prétraitement aux images pour améliorer la détection de la pupille. Un tel prétraitement est par exemple décrit dans la demande de brevet EP 1 764 740. Ce prétraitement comprend tout d'abord une étape de filtrage permettant de supprimer des phénomènes indésirables produisant en général des erreurs de localisation.

L'étape de filtrage comprend l'application d'opérations de fermeture et d'ouverture morphologiques à l'image. L'opération de fermeture morphologique φ1 est effectuée par un élément structurant ayant la forme d'un disque dont le rayon en nombre de pixels correspond approximativement à la longueur d'un cil dans l'image. Dans une image de 320x240 pixels, ce rayon est par exemple de l'ordre de 10 pixels. Cette opération a pour effet d'éliminer les détails fins (de taille inférieure à celle de l'élément structurant) de l'image comme les cils, de lisser les contours des zones plus grandes que l'élément structurant, et de connecter certaines zones.

L'opération d'ouverture morphologique γ1 est effectuée par un second élément structurant de la forme d'un disque dont la taille correspond sensiblement à celle des taches blanches des reflets de lumière sur l'oeil dans l'image. Ce disque présente un rayon compris entre deux et cinq fois celui du disque utilisé par l'opération de fermeture morphologique. Ainsi, dans une image de 320x240 pixels, ce rayon est par exemple de l'ordre de 20 pixels. L'opération d'ouverture morphologique a pour effet d'éliminer au moins en partie les taches blanches, de lisser les contours, mais préserve les zones sombres.

Le filtrage M ainsi réalisé peut être modélisé par la formule suivante :

$$M = \gamma 1 \cdot \varphi 1 \tag{1}$$

La figure 3a représente une image d'un oeil fournie par la caméra 1. La figure 3b représente la même image après avoir subi le filtrage M. Il peut être constaté sur la figure 3b que les taches blanches présentes dans l'image de la figure 3a ont disparu. Il en est de même des cils qui couvraient en partie l'iris. Il est à noter toutefois que ce traitement de filtrage a réduit le contraste entre les différentes régions de l'image regroupant des pixels contigus d'intensités voisines, c'est-à-dire notamment l'iris IR, la cornée CR et la pupille P. Ce traitement de filtrage a également diminué la circularité des régions de l'iris et de la pupille. La baisse de contraste peut être significative si l'intensité moyenne des images originales est faible. Un contraste insuffisant provoque des erreurs de localisation de la pupille et de l'iris.

Une étape de rehaussement de contraste de l'image peut toutefois être réalisée. Pour limiter la durée de ce traitement, le rehaussement du contraste peut être effectué uniquement dans la région de l'iris IR et de la pupille P. A cet effet, le module PRT fait appel au module SAD pour délimiter une zone de recherche ROIP de la pupille dans l'image.

Le module SAD délimite la zone de recherche ROIP en comparant à un seuil l'intensité de chaque pixel de la région de faible intensité de l'image. Il calcule ensuite le centre géométrique et les déviations standard de cette région. Pour vérifier la présence de la pupille P (région sombre) dans l'image, le contraste de la zone de recherche ROIP est déterminé. Si le contraste est élevé, il est alors supposé que la pupille se trouve dans la zone de recherche, sinon, la pupille est considérée perdue et l'image ne sera pas sélectionnée pour effectuer une reconnaissance d'iris.

Le contraste C d'une zone de l'image peut être obtenu par la formule suivante :

$$C = \frac{\mathrm{Imax} - \mathrm{Imin}}{\mathrm{Imax} + \mathrm{Imin}} \qquad (2)$$

dans laquelle Imax et Imin sont les intensités maximale et minimale dans la zone de recherche ROIP de l'image prétraitée. Le module SAD compare le contraste C à un seuil et s'il est supérieur au seuil, il considère que la pupille se trouve dans la zone de recherche ROIP.

Dans le cas d'une séquence d'images, le module SAD recherche la pupille (région noire) dans une première image de la séquence SV, délimite la zone de recherche ROIP où la pupille P est supposée se trouver, et estime la position de la zone ROIP dans chaque image de la séquence en fonction d'une ou plusieurs images précédentes.

Il existe plusieurs procédés de rehaussement de contraste d'une image. Toutefois, il s'agit toujours de diminuer les faibles intensités et d'augmenter les intensités les plus élevées, tout en conservant les formes initiales des régions de l'image.

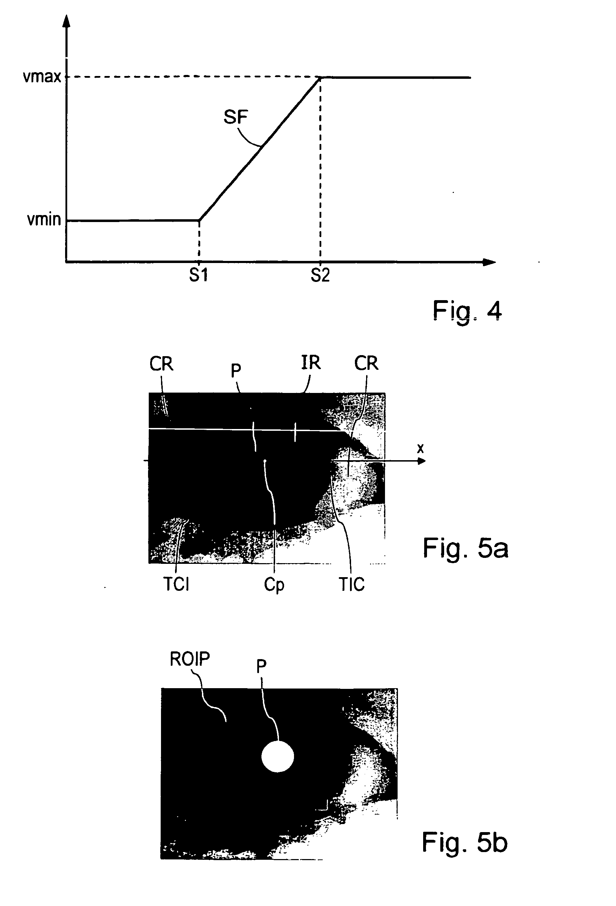

La figure 4 représente un exemple de courbe donnant l'intensité corrigée d'un pixel après rehaussement de contraste en fonction de l'intensité du pixel dans l'image à traiter. Entre 0 et une valeur de seuil s1 d'intensité d'un pixel de l'image à traiter, l'intensité corrigée du pixel est fixée à une valeur minimum vmin, (par exemple égale à 20 pour 256 niveaux de gris). Entre la valeur s1 et une valeur de seuil d'intensité s2, l'intensité corrigée du pixel varie entre la valeur minimum vmin et une valeur maximum d'intensité vmax, (par exemple fixée à 200 pour 256 niveaux de gris). La zone de la courbe entre les valeurs de seuil s1 et s2 détermine une fonction d'étirement linéaire du contraste. Au-delà de la valeur s2, l'intensité corrigée du pixel est fixée à la valeur maximum vmax.

Les valeurs de seuil s1 et s2 peuvent être déterminées de manière adaptative en fonction de l'intensité des pixels de l'image, de la façon suivante:

$$s1 = \mathrm{Imoy} - 2\sigma \qquad (3)$$

avec:

$$\mathrm{Imoy} = \frac{1}{N} \sum_{i=1}^{N} \mathrm{Ii} \qquad (4)$$

$$\sigma = \frac{1}{\sqrt{N}} \sqrt{\sum_{i=1}^{N} (\mathrm{Ii} - \mathrm{Imoy})^2} \qquad (5)$$

Ii étant l'intensité du pixel i dans la zone de recherche ROIP, σ étant l'écart type des intensités des pixels dans la zone ROIP, et N étant le nombre de pixels dans la zone ROIP.

La figure 5a représente une image fournie par le module de prétraitement PRT.

Les images prétraitées par le module de prétraitement PRT sont fournies au module PLOC. Le module PLOC met en oeuvre un procédé de localisation de la pupille. Le procédé de localisation de la pupille P peut utiliser des opérateurs integro-différentiels permettant d'estimer le centre $Cp(\hat{x}, \hat{y})$ de coordonnées estimées $\hat{x}, \hat{y}$, et le rayon Rp de la pupille P. Pour plus d'informations sur ces opérateurs, on pourra se référer aux documents: "High confidence visual recognition of persons by a test of statistical independence", J.G. Daugman, IEEE Transactions on Pattern Analysis and Machine Intelligence, Vol. 15, N°11, p. 1148-1161, 1993, et "High confidence personal identification by rapid video analysis of iris texture", J.Daugman, IEEE Conf. Publication, n°408, European convention on security and détection, 16-18 May 1995.

Les opérateurs integro-différentiels présentent de bonnes performances lorsque les images sont de bonne qualité (très peu de reflets lumineux dans l'image, fort contraste entre la pupille et l'iris). Dans le cas contraire, le taux de bonne localisation diminue. En outre, la complexité algorithmique de ces opérateurs croît en fonction de la taille de l'image. Pour diminuer le temps de calcul de l'opérateur intégro-différentiel, le module PLOC peut utiliser la transformée de Hough décomposée suivant les gradients (GHT), combinée avec l'opérateur intégro-différentiel. La transformée GHT permet d'estimer rapidement la position du centre de la pupille, tandis que l'opérateur intégro-différentiel permet d'affiner la position du centre $Cp(\hat{x}, \hat{y})$ et le rayon Rp de la pupille au voisinage du centre estimé par la GHT. Pour plus d'informations sur ce procédé de localisation de la pupille, on pourra se référer au document : "Person identification technique using human iris recognition", C.L. TISSE, L. MARTIN, L. TORRES, M. ROBERT, The 15th International Conference on Vision Interface, S6.1, p. 294-300, May 27-29, 2002, Calgary, Canada 2002.

Le procédé utilisant la transformée GHT pour localiser la pupille est plus rapide que le procédé basé sur un opérateur intégro-différentiel (complexité algorithmique plus faible) et présente de bonnes performances avec une image de bonne qualité (peu de reflets lumineux, faible présence de cils, région noire au voisinage de la pupille, fort contraste entre la pupille et l'iris, ...). Dans le cas contraire, ces performances diminuent.

Afin de localiser efficacement la pupille P quelle que soit la qualité des images, avec une durée de traitement faible, le module PLOC selon un mode de réalisation, met en oeuvre un modèle de localisation basé sur la segmentation de la pupille P dans la zone de recherche ROIP. A cet effet, tous les pixels dans la zone ROIP de l'image prétraitée (filtrage + rehaussement de contraste) qui ont une intensité égale à s1 sont considérés comme appartenant à la pupille, et les autres pixels sont considérés comme n'appartenant pas à la pupille. L'image segmentée S peut ainsi être obtenue en affectant la valeur maximum 255 (blanc) aux pixels de la pupille et 0 (noir) aux autres pixels de la zone ROIP. La figure 5b est une image illustrant le résultat de la segmentation ainsi réalisée.

Après avoir segmenté la pupille P dans la zone de recherche ROIP, le module PLOC estime la valeur du centre $Cp(\hat{x},\hat{y})$ de la pupille en calculant le centre géométrique des pixels (blancs) de la pupille dans l'image. Le rayon de la pupille Rp est ensuite obtenu à partir de l'expression suivante :

$$Rp = \max(w, h) \qquad\qquad (6)$$

où $\quad w = \left(\frac{4}{\pi}\right)^{1/4}\left(\frac{\phi_2^3}{\phi_1}\right)^{1/8}$ et $h = \left(\frac{4}{\pi}\right)^{1/4}\left(\frac{\phi_1^3}{\phi_2}\right)^{1/8}$

avec $\quad \phi_1 = \sum_{ROIP}(x - \hat{x})^2$ et $\phi_2 = \sum_{ROIP}(y - \hat{y})^2$

(x,y) étant les coordonnées des pixels dans la zone de recherche ROIP.

Pour affiner la valeur du rayon Rp de la pupille P, le module d'affinage PRD peut appliquer l'opérateur intégro-différentiel à l'image prétraitée au voisinage des coordonnées $(\hat{x},\hat{y})$ du centre Cp et du rayon Rp de la pupille, estimés précédemment. L'opérateur intégro-différentiel peut être défini par l'expression suivante:

$$(Rp, \hat{x}, \hat{y}) = \max_{r \in [Rp-3, Rp+3]}\left\{\sum_{\theta=0}^{\theta=2\pi}\left(\frac{I(\hat{x} + r\cos(\theta), \hat{y} + r\sin(\theta))}{2\pi r} - \frac{I(\hat{x} + (r-1)\cos(\theta), \hat{y} + (r-1)\sin(\theta))}{2\pi(r-1)}\right)\right\} \qquad (7)$$

I(x,y) représentant l'intensité du pixel de coordonnées (x,y).

Pour alléger les traitements d'image effectués par le module de sélection IMP, un traitement de sous-échantillonnage spatial peut être appliqué aux images de la séquence d'images SV avant leur traitement par le module de prétraitement PRT. Le traitement de sous-échantillonnage consiste à réduire la résolution des images d'un facteur par exemple égal à 2, pour passer d'images de 640x480 pixels à des images 320x240 pixels. Ce traitement de sous-échantillonnage affecte peu les performances du procédé de localisation selon l'invention.

Une fois que la limite intérieure de l'iris IR a été localisée (par le centre Cp et rayon Rp de la pupille P), le module IDET localise la limite extérieure de l'iris, supposée circulaire, centrée au voisinage du centre Cp de la pupille. La localisation effectuée par le module IDET comprend donc la détermination du centre Ci et du rayon Ri du contour externe de l'iris.

Pour déterminer le rayon externe Ri de l'iris IR, le module IDET peut, comme pour la pupille, utiliser l'opérateur intégro-différentiel. L'opérateur intégro-différentiel est alors appliqué à une grille de petite taille (par exemple 5 x 5 pixels environ) centrée sur le centre Cp $(\hat{x},\hat{y})$ de la pupille P préalablement estimé (qui est supposé voisin du centre Ci de l'iris) et en supposant que le rayon de l'iris est situé dans une plage de valeurs comprise entre 2 et 4 fois le rayon de la pupille. Toutefois, cet opérateur ne permet pas d'estimer avec une grande précision le rayon Ri de l'iris et cette précision décroît lorsque le contraste entre l'iris IR et la cornée CR est faible. Par ailleurs, la complexité algorithmique de l'opérateur intégro-différentiel croît en fonction de la largeur de la plage de valeurs estimée pour le rayon.

Selon un mode de réalisation, ces deux problèmes sont surmontés par un procédé d'estimation rapide du rayon Ri de l'iris IR. Ce procédé est basé sur la localisation des transitions entre l'iris IR et la cornée CR de part et d'autre de la pupille. P. Ainsi, pour localiser le contour extérieur de l'iris, le module IDET se base sur l'utilisation d'un profil d'intensité des pixels situés sur un axe horizontal (Cp,x) passant par le centre Cp de la pupille P sur l'image prétraitée par le module PRT. La figure 5a représente l'axe (Cp,x), l'ordonnée y des pixels de cet axe étant fixée à l'ordonnée estimée $\hat{y}$ du centre Cp de la pupille. D'une manière générale, l'axe (Cp,x) est choisi de manière à traverser les zones de transition entre l'iris IR et la cornée CR de part et d'autre de la pupille.

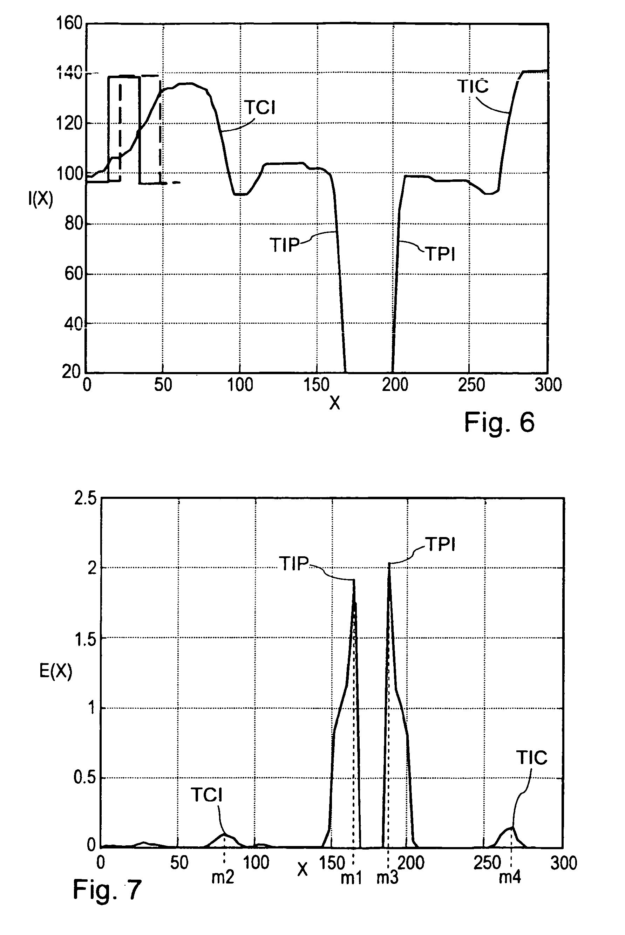

La figure 6 représente un exemple de profil d'intensité I(x) sur l'axe (Cp,x). Le profil d'intensité comporte des zones de pente élevée correspondant aux transitions gauches entre la cornée et l'iris TCI et entre l'iris et la pupille TIP, et aux transitions droites entre la pupille et l'iris TPI et entre l'iris et la cornée TIC.

Selon un mode de réalisation, la localisation des transitions TCI, TIP, TPI, TIC est effectuée en appliquant au profil d'intensité I(x) la transformée de Fourier rapide (SFFT : Shifted Fast Fourier Transform) sur une fenêtre de type porte $\Pi_m(x)$ de centre m mobile, de largeur $\Delta x$, par exemple égale à 16 pixels, et dont le pas d'évolution est fixé par exemple à 4 pixels. Ensuite, l'énergie E(m) des composantes hautes fréquences du spectre de Fourier résultant est calculée à l'aide de la formule suivante :

$$E(m) = \sum_{f \in DHF} \left| \sum_{x=1}^{\Delta x} I(x) \Pi_m(x) e^{\frac{-2\pi i f x}{\Delta x}} \right|^2 \qquad (8)$$

dans laquelle DHF représente le domaine des composantes hautes fréquences $[0, ..., \Delta f/4]$, $\Delta f$ étant par exemple égal à 16. Dans cet exemple, le domaine des composantes hautes fréquences considéré correspond au quart supérieur du spectre de Fourier, c'est-à-dire aux quatre plus grandes valeurs. La figure 7 représente une courbe de variation de l'énergie des composantes hautes fréquences E(m) des pixels le long de l'axe (Cp,x).

La transition gauche entre l'iris et la pupille TIP est détectée en une position m1 sur l'axe (Cp, x) où l'énergie haute fréquence E(m) est maximale (pic central E(m1)). La transition gauche entre la cornée et l'iris TCI correspond à une position m2 où peut être observé un deuxième pic d'énergie E(m2) (autre maximum local). Le même raisonnement est appliqué pour localiser des positions m3 et m4 correspondant aux transitions droites entre la pupille et l'iris TIP et entre l'iris et la cornée TIC. Des pics d'énergie E(m3), E(m4) correspondant aux transitions droites TPI et TIC peuvent être observés aux positions m3 et m4. Les positions m2 et m4 sur l'axe (Cp,x) des transitons entre l'iris et la cornée TCI, TIC sont celles qui sont respectivement le plus à droite et le plus à gauche parmi les quatre positions m1-m4 sur l'axe (Cp,x), ou bien celles qui correspondent aux deux pics d'énergie les moins élevés parmi les quatre pics observés E(m1), E(m2), E(m3), E(m4).

Le rayon approximatif de l'iris Ri est obtenu à l'aide de l'expression suivante:

$$Ri1 = |\hat{x} - m4|, \quad Ri2 = |\hat{x} - m2|$$

Si Ri1 ≈ Ri2 alors
Si E(m4) > E(m2) alors Ri = Ri1
Sinon Ri = Ri2
Sinon
Si E(m4) < E(m2), alors Ri = Ri1

$$Sinon\ Ri = Ri2 \qquad (9)$$

$\hat{x}$ étant la position sur l'axe (Cp,x) du centre Cp de la pupille. En d'autres termes, le rayon de l'iris Ri est choisi égal à la distance Ri1 ou Ri2 en nombre de pixels entre la position $\hat{x}$ du centre Cp de la pupille sur l'axe (Cp,x) et la position m2 ou m4 correspondant au pic d'énergie E(m2), E(m4) le plus élevé des transitions TCI, TIC si les distances Ri1 et Ri2 sont proches. Dans le cas contraire, la valeur du rayon Ri est calculée avec la position m2 ou m4 correspondant au pic d'énergie E(m2), E(m4) le plus faible.

Selon un autre mode de réalisation, la localisation des transitions TCI, TIC entre l'iris et la cornée le long de l'axe (Cp, x) passant par le centre de la pupille Cp est effectuée en appliquant un procédé dit de "filtrage gradient".

Le procédé de filtrage gradient comprend l'application d'un filtre gradient G(m) entre deux fenêtres mobiles successives de type porte $\Pi_{m-1}(x)$, $\Pi_m(x)$ de centres m-1, m, espacées d'un pas d'évolution fixé par exemple à 4 pixels, chaque porte $\Pi_m(x)$ ayant une largeur $\Delta x$ par exemple égale à 16. Le filtre gradient G(m) peut être exprimé de la manière suivante :

$$G(m) = \frac{1}{\Delta x} \sum_{x \in \Pi_m} I(x) - \frac{1}{\Delta x} \sum_{x \in \Pi_{m-1}} I(x) \qquad (10)$$

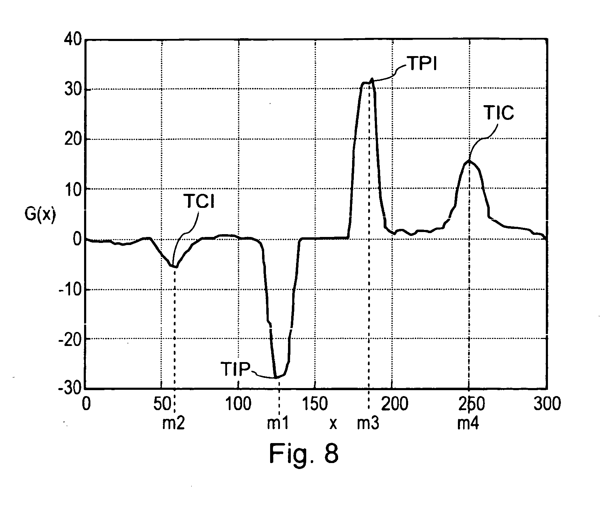

La figure 8 représente un exemple de courbe de variation du filtre gradient G(m) appliqué aux pixels de l'axe (Cp,x). A la position m1 correspondant à la transition gauche entre l'iris et la pupille TIP la courbe du filtre gradient G(m) présente une valeur minimum G(m1) (pic central négatif). A la position m2 correspondant à la transition gauche entre la cornée et l'iris TCI, la courbe présente un second pic négatif (autre valeur minimum locale) G(m2). A la transition droite entre la pupille et l'iris TPI, située à la position m3, la courbe G(m) présente une valeur maximum G(m3) (pic central positif). A la transition droite entre l'iris et la cornée TIC située à la position m4, un second pic positif G(m4) (autre valeur maximum locale) peut être observé sur la courbe du filtre gradient G(m). Ici encore, les positions m2 et m4 sur l'axe (Cp,x) des transitions entre l'iris et la cornée TCI, TIC sont celles qui sont respectivement le plus à droite et le plus à gauche parmi les quatre positions m1-m4, ou celles qui correspondent aux deux pics du filtre gradient les moins élevés en valeur absolue parmi les quatre pics observés G(m1), G(m2), G(m3), G(m4).

Le rayon approximatif de l'iris est alors obtenu à l'aide de la formule suivante :

$$\mathrm{Ri1} = |\hat{x} - \mathrm{m4}|, \quad \mathrm{Ri2} = |\hat{x} - \mathrm{m2}|$$

Si Ri1 $\approx$ Ri2 alors
Si |G(m4)| > |G(m2)| alors Ri = Ri1
Sinon Ri = Ri2
Sinon
Si |G(m4)| < |G(m2)|, alors Ri = Ri1

$$\mathrm{Sinon} \ \mathrm{Ri} = \mathrm{Ri2} \qquad\qquad\qquad (11)$$

En d'autres termes, le rayon de l'iris Ri est choisi égal à la distance en nombre de pixels entre la position $\hat{x}$ du centre de la pupille sur l'axe (Cp,x) et la position m2 ou m4 correspondant à la valeur du filtre gradient G(m2), G(m4) la plus élevée en valeur absolue des transitions TCI, TIC si les distances Ri1 et Ri2 sont proches. Dans le cas contraire, la valeur du rayon Ri est calculée avec la position m2 ou m4 correspondant au pic du filtre gradient G(m2), G(m4) le plus faible en valeur absolue.

Comme pour la détermination du rayon Rp de la pupille, la valeur du rayon Ri et la position du centre Ci de l'iris peuvent ensuite être affinées à l'aide de l'opérateur différentiel décrit ci-dessus, appliqué à l'image prétraitée. Le centre Ci($\hat{x}$i,$\hat{y}$i) de l'iris peut ainsi être obtenu avec une grille de taille 5 x 5 pixels centrée sur le centre de la pupille $C_p$ ($\hat{x}$,$\hat{y}$), et la valeur du rayon de l'iris est voisine de la valeur Ri précédemment calculée. Le centre Ci($\hat{x}$i,$\hat{y}$i) et le rayon Ri de l'iris peuvent être affinés à l'aide de la formule suivante :

$$(\mathrm{Ri}, \hat{x}i, \hat{y}i) = \max_{\substack{r \in [\mathrm{Ri}-4, \mathrm{Ri}+8] \\ x \in [\hat{x}-2, \hat{x}+2] \\ y \in [\hat{y}-2, \hat{y}+2]}} \left\{ \sum_{\theta=0}^{\theta=2\pi} \left( \frac{I(x + r\cos(\theta), y + r\sin(\theta))}{2\pi r} - \right. \right.$$
$$\left. \left. \frac{I(x + (r-1)\cos(\theta), y + (r-1)\sin(\theta))}{2\pi(r-1)} \right) \right\} \qquad (12)$$

Le procédé selon l'invention s'avère peu sensible aux occlusions de l'oeil par une paupière ou les cils, au contraste entre l'iris et la cornée ou entre la cornée et la pupille, et à la présence de reflets lumineux parasites sur l'oeil. Il peut être mis en oeuvre sans nécessiter d'importants moyens de calcul, tout en offrant un taux de bonne localisation proche de 100 %. Le procédé de l'invention est donc adapté aux systèmes de reconnaissance d'iris à faible coût, c'est-à-dire ayant une caméra peu performante en ce qui concerne l'optique et le capteur d'image (sans dispositif d'autofocus, avec une faible profondeur de champ, une faible résolution optique, ...), et des moyens de calculs de faible capacité.

Il apparaîtra clairement à l'homme de l'art que la présente invention est susceptible de diverses variantes de réalisation et d'applications. En particulier, l'invention n'est pas limitée à une localisation du contour extérieur de l'iris faisant intervenir un calcul d'énergie de composantes hautes fréquences ou d'un filtre gradient. D'autres procédés permettant de détecter des sauts d'intensités correspondant aux positions sur l'axe (Cp, x) des transitions entre l'iris et la cornée peuvent être envisagés par l'homme de l'art. Il importe que cette détection soit effectuée parmi des pixels le long d'une ligne droite ou courbe, ou encore d'une ligne composée de segments de droite, traversant la pupille et des zones de transition entre l'iris et la cornée, de part et d'autre de la pupille. Ainsi, il n'est pas nécessaire que cette ligne soit droite et passe exactement par le centre estimé de la pupille.

Par ailleurs, d'autres procédés de localisation du contour de la pupille peuvent être envisagés, sans sortir du cadre de la présente invention. Il en est de même du procédé de prétraitement. Le procédé selon l'invention peut également être mis en oeuvre sans prévoir de prétraitement préalable de l'image afin d'éliminer les cils et les reflets ou rehausser le contraste. L'absence de tout ou partie d'un tel prétraitement n'entraîne qu'une baisse de performances de la localisation de l'iris.

## Revendications

**1.** Procédé de localisation de l'iris dans une image d'un oeil, comprenant des étapes d'estimation du centre (Cp) et du rayon (Rp) de la pupille (P) dans l'image, de détection de positions de sauts d'intensité de pixels situés sur une ligne (Cp,x) passant sensiblement par le centre estimé de la pupille et des zones de transition entre l'iris (IR) et la cornée (CR), de part et d'autre de la pupille, et de détermination du rayon (Ri) d'un cercle centré sensiblement sur le centre estimé de la pupille et passant par les positions détectées des sauts d'intensité, **caractérisé en ce que** la détection des positions des sauts d'intensité (TCI, TIP, TPI, TIC) est effectuée en recherchant des positions où un filtre gradient appliqué entre deux fenêtres mobiles successives de type porte qui se chevauchent, aux intensités des pixels situés sur la ligne (Cp,x), présente localement un extrémum.

**2.** Procédé selon la revendication 1, dans lequel le rayon (Ri) de l'iris (IR) est déterminé en calculant la distance entre la position ($\hat{x}$) du centre (Cp) de la pupille et l'une des positions des sauts d'intensité (m2, m4) sur la ligne (Cp,x), dans les zones de transition gauche et droite entre la cornée et l'iris (TCI, TIC).

**3.** Procédé selon l'une des revendications 1 et 2, dans lequel les positions des sauts d'intensité (m2, m4) sur la ligne (Cp,x) dans les zones de transition gauche et droite entre la cornée et l'iris (TCI, TIC) sont déterminées en recherchant deux positions où la valeur du filtre gradient (G(m)) présente localement un extrémum.

**4.** Procédé selon l'une des revendications 1 à 3, dans lequel le filtre gradient (G(m)) est calculé de la manière suivante :

$$G(m) = \frac{1}{\Delta x} \sum_{x \in \Pi_m} I(x) - \frac{1}{\Delta x} \sum_{x \in \Pi_{m-1}} I(x)$$

dans laquelle I(x) représente l'intensité d'un pixel à la position x, m et m-1 représentent la position du centre des fenêtres mobiles de type porte $\Pi_m(x)$ et $\Pi_{m-1}(x)$, et $\Delta x$ représente la largeur des fenêtres mobile.

**5.** Procédé selon l'une des revendications 1 à 4, dans lequel la largeur des fenêtres mobiles ($\Pi_m(x)$) est égale à 16 pixels et le pas de déplacement des fenêtres mobiles est fixé à 4 pixels.

**6.** Procédé selon l'une des revendications 1 à 5, dans lequel le rayon de l'iris (Ri) est estimé en recherchant les positions (m2, m4) où le filtre gradient (G(m2), G(m4)) présente localement un extrémum dans les zones de transition (TCI, TIC) entre l'iris (IR) et la cornée (CR), en calculant les distances (Ri1 ou Ri2) entre la position du centre de la pupille sur la ligne et les positions (m2, m4) où le filtre gradient présente localement un extrémum, le rayon de l'iris étant estimé égal à la distance (Ri1 ou Ri2) avec la position (m2 ou m4) où la valeur du filtre gradient est la plus élevée en valeur absolue si les distances (Ri1 Ri2) sont proches, et sinon le rayon de l'iris est estimé égal à la distance (Ri1 ou Ri2) avec la position (m2 ou m4) où la valeur du filtre gradient est la plus faible en valeur absolue.

7.  Procédé selon l'une des revendications 1 à 6, dans lequel la position du centre (Ci) et la valeur du rayon (Ri) de l'iris sont affinées par un opérateur intégro-différentiel appliqué à la position du centre de la pupille (Cp) et une valeur estimée du rayon de l'iris (Ri).

8.  Procédé selon l'une des revendications 1 à 7, dans lequel la localisation de la pupille (P) est effectuée par une segmentation de l'image, pour délimiter le contour de la pupille, suivie d'une estimation du centre (Cp) de la pupille par un calcul de centre géométrique du contour de la pupille.

9.  Procédé selon la revendication 8, dans lequel le rayon Rp de la pupille est obtenu par l'expression suivante :

$$Rp = max(w,h)$$

où $w = \left(\frac{4}{\pi}\right)^{1/4}\left(\frac{\phi_2^3}{\phi_1}\right)^{1/8}$ et $h = \left(\frac{4}{\pi}\right)^{1/4}\left(\frac{\phi_1^3}{\phi_2}\right)^{1/8}$

avec $\phi_1 = \sum_{ROIP}(x - \hat{x})^2$ et $\phi_2 = \sum_{ROIP}(y - \hat{y})^2$

x, y étant les coordonnées des pixels dans la zone de recherche ROIP, et $\hat{x}, \hat{y}$ étant les coordonnées du centre (Cp) de la pupille.

10. Procédé selon la revendication 9, dans lequel la valeur du rayon (Rp) de la pupille est affinée par un opérateur intégro-différentiel.

11. Procédé selon l'une des revendications 1 à 10, comprenant une étape de prétraitement effectuant un filtrage des intensités des pixels de l'image pour éliminer les cils sur la cornée et l'iris, ainsi que les reflets sur la pupille.

12. Procédé selon la revendication 11, dans lequel le filtrage effectué durant l'étape de prétraitement applique aux intensités des pixels de l'image des opérations de fermeture et d'ouverture morphologiques.

13. Procédé selon la revendication 11 ou 12, dans lequel l'étape de prétraitement comprend l'application d'un traitement de rehaussement de contraste aux intensités des pixels de l'image.

14. Procédé selon la revendication 13, dans lequel le rehaussement de contraste est effectué uniquement sur une zone de l'image (ROIP) dans laquelle la pupille est supposée se trouver.

15. Dispositif de localisation de l'iris dans une image d'un oeil, configuré pour estimer le centre (Cp) et du rayon (Rp) de la pupille (P) dans l'image, détecter des positions de sauts d'intensité de pixels situés sur une ligne (Cp,x) passant sensiblement par le centre estimé de la pupille et des zones de transition entre l'iris (IR) et la cornée (CR), de part et d'autre de la pupille, et déterminer le rayon (Ri) d'un cercle centré sensiblement sur le centre estimé de la pupille et passant par les positions détectées des sauts d'intensité,
    **caractérisé en ce qu'**il est configuré pour détecter les positions des sauts d'intensité (TCI, TIP, TPI, TIC) en recherchant des positions où un filtre gradient appliqué entre deux fenêtres mobiles successives de type porte qui se chevauchent, aux intensités des pixels situés sur la ligne (Cp,x), présente localement un extrémum.

16. Dispositif selon la revendication 15, configuré pour déterminer le rayon (Ri) de l'iris en calculant la distance entre la position ($\hat{x}$) du centre (Cp) de la pupille sur la ligne (Cp,x) et l'une des positions des sauts d'intensité (m3, m4) sur la ligne (Cp,x), dans les zones de transition gauche et droite entre la cornée et l'iris (TCI, TIC).

17. Dispositif selon l'une des revendications 15 et 16, configuré pour déterminer les positions des sauts d'intensité (m2, m4) sur la ligne (Cp,x) dans les zones de transition gauche et droite entre la cornée et l'iris (TCI, TIC) en recherchant deux positions où la valeur du filtre gradient (G(m)) présente localement un extremum.

**18.** Dispositif selon l'une des revendications 15 à 17, configuré pour calculer le filtre gradient (G(m)) de la manière suivante :

$$G(m) = \frac{1}{\Delta x} \sum_{x \in \Pi_m} I(x) - \frac{1}{\Delta x} \sum_{x \in \Pi_{m-1}} I(x)$$

dans laquelle I(x) représente l'intensité d'un pixel à la position x, m et m-1 représentent la position du centre des fenêtres mobiles de type porte $\Pi_m(x)$ et $\Pi_{m-1}(x)$, et $\Delta x$ représente la largeur des fenêtres mobile.

**19.** Dispositif selon l'une des revendications 15 à 18, dans lequel la largeur des fenêtres mobiles ($\Pi_m(x)$) est égale à 16 pixels et le pas de déplacement des fenêtres mobiles est fixé à 4 pixels.

**20.** Dispositif selon l'une des revendications 15 à 19, configuré pour déterminer le rayon de l'iris (Ri) en recherchant les positions (m2 et m4) où le filtre gradient (G(m2), G(m4)) présente localement un extrémum dans les zones de transition (TCI, TIC) entre l'iris (IR) et la cornée (CR), en calculant les distances (Ri1, Ri2) entre la position ($\hat{x}$) du centre de la pupille sur la ligne (Cp,x) et les positions (m2, m4) où le filtre gradient présente localement un extrémum, le rayon de l'iris étant estimé égal à la distance (Ri1 ou Ri2) avec la position (m2 ou m4) où la valeur du filtre gradient (G(m2), G(m4)) est la plus élevée en valeur absolue si les distances (Ri1, Ri2) sont proches, et sinon le rayon de l'iris est estimé égal à la distance (Ri1 ou Ri2) avec la position (m2 ou m4) où la valeur du filtre gradient est la plus faible en valeur absolue.

**21.** Dispositif selon l'une des revendications 15 à 20, configuré pour affiner la position du centre (Ci) et la valeur du rayon (Ri) de l'iris (IR) par un opérateur intégro-différentiel appliqué à la position du centre de la pupille (Cp) et une valeur estimée du rayon de l'iris (Ri).

**22.** Dispositif selon l'une des revendications 15 à 21, configuré pour localiser la pupille (P) par une segmentation de l'image, pour délimiter le contour de la pupille (P), puis estimer le centre (Cp) de la pupille par un calcul de centre géométrique du contour de la pupille.

**23.** Dispositif selon la revendication 22, configuré pour calculer le rayon Rp de la pupille par l'expression suivante :

$$Rp = \max(w, h)$$

où $w = \left(\frac{4}{\pi}\right)^{1/4} \left(\frac{\phi_2^3}{\phi_1}\right)^{1/8}$ et $h = \left(\frac{4}{\pi}\right)^{1/4} \left(\frac{\phi_1^3}{\phi_2}\right)^{1/8}$

avec $\phi_1 = \sum_{ROIP} (x - \hat{x})^2$ et $\phi_2 = \sum_{ROIP} (y - \hat{y})^2$ x, y étant les coordonnées des pixels dans la zone de recherche ROIP, et $\hat{x}, \hat{y}$ étant les coordonnées du centre (Cp) de la pupille.

**24.** Dispositif selon la revendication 23, configuré pour affiner la valeur du rayon (Rp) de la pupille par un opérateur intégro-différentiel.

**25.** Dispositif selon l'une des revendications 15 à 24, configuré pour prétraiter l'image en effectuant un filtrage des intensités des pixels de l'image pour éliminer les cils sur la cornée et l'iris, ainsi que les reflets sur la pupille.

**26.** Dispositif selon la revendication 25, dans lequel le filtrage est effectué en appliquant aux intensités des pixels de l'image des opérations de fermeture et d'ouverture morphologiques.

**27.** Dispositif selon l'une des revendications 25 et 26, dans lequel le prétraitement de l'image est effectué en appliquant un traitement de rehaussement de contraste aux intensités des pixels de l'image.

**28.** Dispositif selon la revendication 27, configuré pour rehausser le contraste de l'image uniquement dans une zone de l'image (ROIP) dans laquelle la pupille est supposée se trouver.

**Claims**

**1.** Method for locating a human iris in an eye image, comprising estimating the centre (Cp) and the radius (Rp) of the pupil (P) in the image, detecting positions of intensity jumps of pixels located on a line (Cp,x) substantially passing by the estimated centre of the pupil and transition areas between the iris (IR) and the cornea (CR), on each side of the pupil, and determining the radius (Ri) of a circle substantially centred on the estimated centre of the pupil and passing by the detected positions of the intensity jumps,
**characterised in that** detecting the positions of the intensity jumps (TCI, TIP, TPI, TIC) is made by searching positions where a gradient filter applied between two successive mobile windows of gate type which overlap, to the intensities of the pixels located on the line (Cp,x), locally has an extremum.

**2.** Method according to claim 1, wherein the radius (Ri) of the iris (IR) is determined by calculating the distance between the position ($\hat{x}$) of the centre (Cp) of the pupil and one of the positions of the intensity skips (m2, m4) on the line (Cp,x), in the left and right transition areas between the cornea and the iris (TCI, TIC).

**3.** Method according to one of claims 1 and 2, wherein the positions of the intensity jumps (m2, m4) on the line (Cp, x) in the left and right transition areas between the cornea and the iris (TCI, TIC) are determined by searching two positions where the value of the gradient filter (G(m)) locally has an extremum.

**4.** Method according to one of claims 1 to 3, wherein the gradient filter (G(m)) is calculated as follows:

$$G(m) = \frac{1}{\Delta x} \sum_{x \in \Pi_m} I(x) - \frac{1}{\Delta x} \sum_{x \in \Pi_{m-1}} I(x)$$

where I(x) represents the intensity of a pixel at the position x, m and m-1 represent the position of the centre of the mobile windows of gate type $\Pi_m(x)$ and $\Pi_{m-1}(x)$, and $\Delta x$ represents the width of the mobile windows.

**5.** Method according to one of claims 1 to 4, wherein the width of the mobile windows ($\Pi_m(x)$ is equal to 16 pixels and the shift step of the mobile windows is fixed to 4 pixels.

**6.** Method according to one of claims 1 to 5, wherein the radius of the iris (Ri) is estimated by searching the positions (m2, m4) where the gradient filter (G(m2), G(m4)) locally has an extremum in the transition areas (TCI, TIC) between the iris (IR) and the cornea (CR), by calculating the distances (Ri1 or Ri2) between the position of the pupil centre on the line and the positions (m2, m4) where the gradient filter locally has an extremum, the iris radius being estimated equal to the distance (Ri1 or Ri2) with the position (m2 or m4) where the value of the gradient filter is the highest in absolute value if the distances (Ri1, Ri2) are near, and otherwise the iris radius is estimated equal to the distance (Ri1 or Ri2) with the position (m2 or m4) where the value of the gradient filter is the lowest in absolute value.

**7.** Method according to one of claims 1 to 6, wherein the position of the centre (Ci) and the value of the radius (Ri) of the iris are refined by an integro-differential operator applied to the position of the centre of the pupil (Cp) and an estimated value of the radius of the iris (Ri).

**8.** Method according to one of claims 1 to 7, wherein the location of the pupil (P) is performed by a segmentation of the image, to delineate the outline of the pupil, followed by an estimation of the centre (Cp) of the pupil by a geometric centre calculation of the pupil outline.

**9.** Method according to claim 8, wherein the radius Rp of the pupil is obtained by the following relationship:

```
Rp = max(w,h)
```

where $w = \left(\dfrac{4}{\pi}\right)^{1/4}\left(\dfrac{\phi_2^3}{\phi_1}\right)^{1/8}$ and $h = \left(\dfrac{4}{\pi}\right)^{1/4}\left(\dfrac{\phi_1^3}{\phi_2}\right)^{1/8}$

with $\phi_1 = \displaystyle\sum_{ROIP}(x - \hat{x})^2$ and $\phi_2 = \displaystyle\sum_{ROIP}(y - \hat{y})^2$

where x, y are the coordinates of the pixels in the searching area ROIP, and $\hat{x}, \hat{y}$ are the coordinates of the centre (Cp) of the pupil.

10. Method according to claim 9, wherein the value of the radius (Rp) of the pupil is refined by an integro-differential operator.

11. Method according to one of claims 1 to 10, comprising a pre-processing step of filtering the intensities of the image pixels to eliminate the eyelashes on the cornea and the iris, as well as reflection on the pupil.

12. Method according to claim 11, wherein the filtering performed during the pre-processing step applies to the image pixels intensities morphological closing and opening operations.

13. Method according to claim 11 or 12, wherein the pre-processing step comprises applying a contrast enhancement process to the image pixel intensities.

14. Method according to claim 13, wherein the contrast enhancement is performed only on an area of the image (ROIP) where the pupil is supposed to be located.

15. Device for locating a human iris in an eye image, configured to estimate the centre (Cp) and the radius (Rp) of the pupil (P) in the image, to detect positions of intensity jumps of pixels located on a line (Cp,x) substantially passing by the estimated centre of the pupil and transition areas between the iris (IR) and the cornea (CR), on each side of the pupil, and to determine the radius (Ri) of a circle substantially centred on the estimated centre of the pupil and passing by the detected positions of the intensity jumps,
**characterised in that** it is configured to detect the positions of the intensity jumps (TCI, TIP, TPI, TIC) by searching positions where a gradient filter applied between two successive mobile windows of gate type which overlap, to the intensities of the pixels located on the line (Cp,x), locally has an extremum.

16. Device according to claim 15, configured to determine the radius (Ri) of the iris by calculating the distance between the position ($\hat{x}$) of the centre (Cp) of the pupil on the line (Cp,x) and one of the positions of the intensity jumps (m3, m4) on the line (Cp,x), in the left and right transition areas between the cornea and the iris (TCI, TIC).

17. Device according to one of claims 15 and 16, configured to determine the positions of the intensity jumps (m2, m4) on the line (Cp,x) in the left and right transition areas between the cornea and the iris (TCI, TIC) by searching two positions where the value of the gradient filter (G(m)) locally has an extremum.

18. Device according to one of claims 15 to 17, configured to calculate the gradient filter (G(m)) as follows:

$$G(m) = \frac{1}{\Delta x}\sum_{x \in \Pi_m} I(x) - \frac{1}{\Delta x}\sum_{x \in \Pi_{m-1}} I(x)$$

where I(x) represents the intensity of a pixel at the position x, m and m-1 represent the position of the centre of the mobile windows of gate type $\Pi_m$ (x) and $\Pi_{m-1}$ (x), and $\Delta x$ represents the width of the mobile windows.

19. Device according to one of claims 15 to 18, wherein the width of the mobile windows ($\Pi_m(x)$) is equal to 16 pixels and the shift step of the mobile windows is fixed to 4 pixels.

20. Device according to one of claims 15 to 19, configured to determine the radius of the iris (Ri) by searching the positions (m2 and m4) where the gradient filter (G(m2), G(m4)) locally has an extremum in the transition areas (TCI, TIC) between the iris (IR) and the cornea (CR), by calculating the distances (Ri1, Ri2) between the position ($\hat{x}$) of the pupil centre on the line (Cp,x) and the positions (m2, m4) where the gradient filter locally has an extremum, the iris radius being estimated equal to the distance (Ri1 or Ri2) with the position (m2 or m4) where the value of the gradient filter (G(m2), G(m4)) is the highest in absolute value if the distances (Ri1, Ri2) are near, and otherwise the iris radius is estimated equal to the distance (Ri1 or Ri2) with the position (m2 or m4) where the value of the gradient filter is the lowest in absolute value.

21. Device according to one of claims 15 to 20, configured to refine the position of the centre (Ci) and the value of the radius (Ri) of the iris (IR) by an integro-differential operator applied to the position of the centre of the pupil (Cp) and an estimated value of the radius of the iris (Ri).

22. Device according to one of claims 15 to 21, configured to locate the pupil (P) by a segmentation of the image, to delineate the outline of the pupil (P), and then estimate the centre (Cp) of the pupil by a geometric centre calculation of the pupil outline.

23. Device according to claim 22, configured to calculate the radius Rp of the pupil by the following relationship:

$$\text{Rp} = \max(\text{w,h})$$

where $w = \left(\dfrac{4}{\pi}\right)^{1/4}\left(\dfrac{\phi_2^3}{\phi_1}\right)^{1/8}$ and $h = \left(\dfrac{4}{\pi}\right)^{1/4}\left(\dfrac{\phi_1^3}{\phi_2}\right)^{1/8}$

with $\phi_1 = \sum_{ROIP}(x - \hat{x})^2$ and $\phi_2 = \sum_{ROIP}(y - \hat{y})^2$

where x, y are the coordinates of the pixels in the searching area ROIP, and $\hat{x},\hat{y}$ are the coordinates of the centre (Cp) of the pupil.

24. Device according to claim 23, configured to refine the value of the radius (Rp) of the pupil by an integro-differential operator.

25. Device according to one of claims 15 to 24, configured to pre-process the image by performing filtering the intensities of the image pixels to eliminate the eyelashes on the cornea and the iris, as well as reflection on the pupil.

26. Device according to claim 25, wherein filtering is performed by applying to the intensities of the image pixels morphological closing and opening operations.

27. Device according to one of claims 25 and 26, wherein pre-processing the image is performed by applying a contrast enhancement process to the intensities of the image pixels.

28. Device according to claim 27, configured to enhance the contrast of the image only on an area of the image (ROIP) where the pupil is supposed to be located.


**Patentansprüche**

1. Verfahren zur Lokalisierung der Iris in einem Bild eines Auges, umfassend Schritte der Schätzung des Zentrums (Cp) und des Radius (Rp) der Pupille (P) im Bild, der Erkennung von Positionen von Intensitätssprüngen von Pixels, die sich auf einer Linie (Cp,x) befinden, im Wesentlichen das geschätzte Zentrum der Pupille und Übergangszonen zwischen der Iris (IR) und der Hornhaut (CR) durchquerend, und dies beiderseitig der Pupille, und der Bestimmung des Radius (Ri) eines Kreises, der im Wesentlichen am geschätzten Zentrum der Pupille zentriert ist und die erkannten Positionen der Intensitätssprünge durchquert,
**dadurch gekennzeichnet, dass** die Erkennung der Positionen der Intensitätssprünge (TCI, TIP, TPI, TIC) ausgeführt wird, indem Positionen gesucht werden, in denen ein Gradientenfilter, der zwischen zwei sukzessiven türartigen mobilen Fenstern, die sich überdecken, an die Intensitäten der Pixels, die sich auf der Linie (Cp,x) befinden, angewandt wird, lokal ein Extremum aufweist.

2. Verfahren nach Anspruch 1, in dem der Radius (Ri) der Iris (IR) bestimmt wird durch das Berechnen der Distanz zwischen der Position ($\hat{x}$) des Zentrums (Cp) der Pupille und einer der Positionen der Intensitätssprünge (m2, m4) auf der Linie (Cp,x), in der linken und in der rechten Übergangszone zwischen der Hornhaut und der Iris (TCI, TIC).

3. Verfahren nach einem der Ansprüche 1 und 2, in dem die Positionen der Intensitätssprünge (m2, m4) auf der Linie (Cp,x) in der linken und in der rechten Übergangszone zwischen der Hornhaut und der Iris (TCI, TIC) bestimmt werden durch das Suchen von zwei Positionen, in denen der Wert des Gradientenfilters (G(m)) lokal ein Extremum aufweist.

4. Verfahren nach einem der Ansprüche 1 bis 3, in dem der Gradientenfilter (G(m)) auf folgende Art und Weise berechnet wird:

$$G(m) = \frac{1}{\Delta x} \sum_{x \in \Pi_m} I(x) - \frac{1}{\Delta x} \sum_{x \in \Pi_{m-1}} I(x)$$

in der I(x) die Intensität eines Pixels in der Position x darstellt, m und m-1 die Position des Zentrums der türartigen mobilen Fenster $\Pi_m$ (x) und $\Pi_{m-1}$(x) darstellen, und $\Delta$x die Breite der mobilen Fenster darstellt.

5. Verfahren nach einem der Ansprüche 1 bis 4, in dem die Breite der mobilen Fenster ($\Pi_m$(x)) 16 Pixels gleich kommt und der Verschiebungsschritt der mobilen Fenster auf 4 Pixels festgelegt ist.

6. Verfahren nach einem der Ansprüche 1 bis 5, in dem der Radius der Iris (Ri) geschätzt wird durch das Suchen der Positionen (m2, m4) in denen der Gradientenfilter (G(m2), G(m4)) lokal ein Extremum in den Übergangszonen (TCI, TIC) zwischen der Iris (IR) und der Hornhaut (CR) aufweist, durch das Berechnen der Distanzen (Ri1 oder Ri2) zwischen der Position des Zentrums der Pupille auf der Linie und den Positionen (m2, m4) in denen der Gradientenfilter lokal ein Extremum aufweist, wobei der Radius der Iris geschätzt ist gleich der Distanz (Ri1 oder Ri2) mit der Position (m2 oder m4) in der der Wert des Gradientenfilters als absoluter Wert am höchsten ist, wenn die Distanzen (Ri1, Ri2) nah sind, und ansonsten der Radius der Iris geschätzt ist gleich der Distanz (Ri1 oder Ri2) mit der Position (m2 oder m4) in der der Wert des Gradientenfilters als absoluter Wert am niedrigsten ist.

7. Verfahren nach einem der Ansprüche 1 bis 6, in dem die Position des Zentrums (Ci) und der Wert des Radius (Ri) der Iris verfeinert werden durch einen Integro-Differential-Operator, der an die Position des Zentrums der Pupille (Cp) angewandt wird, und einen geschätzten Wert des Radius der Iris (Ri).

8. Verfahren nach einem der Ansprüche 1 bis 7, in dem die Lokalisierung der Pupille (P) ausgeführt wird durch eine Segmentierung des Bildes, um die Kontur der Pupille abzugrenzen, mit anschließender Schätzung des Zentrums (Cp) der Pupille durch eine Berechnung des geometrischen Zentrums der Kontur der Pupille.

9. Verfahren nach Anspruch 8, in dem der Radius Rp der Pupille durch den folgenden Ausdruck erhalten wird:

$$Rp = \max(w, h)$$

wo $w = \left(\frac{4}{\pi}\right)^{1/4} \left(\frac{\phi_2^3}{\phi_1}\right)^{1/8}$ und $h = \left(\frac{4}{\pi}\right)^{1/4} \left(\frac{\phi_1^3}{\phi_2}\right)^{1/8}$

mit $\phi_1 = \sum_{ROIP} (x - \hat{x})^2$ und $\phi_2 = \sum_{ROIP} (y - \hat{y})^2$

wobei x, y die Koordinaten der Pixels in der Suchzone ROIP sind, und wobei $\hat{x}, \hat{y}$ die Koordinaten des Zentrums (Cp) der Pupille sind.

10. Verfahren nach Anspruch 9, in dem der Wert des Radius (Rp) der Pupille durch einen Integro-Differential-Operator verfeinert wird.

11. Verfahren nach einem der Ansprüche 1 bis 10, umfassend einen Schritt der Vorverarbeitung, die eine Filterung der Intensitäten der Pixels des Bildes ausführt, um die Wimpern auf der Hornhaut und der Iris sowie die Reflexe auf der Pupille zu beseitigen.

12. Verfahren nach Anspruch 11, in dem die während des Schrittes der Vorverarbeitung ausgeführte Filterung Vorgänge des morphologischen Schließens und Öffnens an die Intensitäten der Pixels des Bildes anwendet.

13. Verfahren nach Anspruch 11 oder 12, in dem der Schritt der Vorverarbeitung die Anwendung einer Verarbeitung der Kontrasterhöhung an die Intensitäten der Pixels des Bildes umfasst.

14. Verfahren nach Anspruch 13, in dem die Kontrasterhöhung nur in einer Zone des Bildes (ROIP) ausgeführt wird, in der angenommen wird, dass sich die Pupille dort befindet.

15. Vorrichtung zur Lokalisierung der Iris in einem Bild eines Auges, konfiguriert zum Schätzen des Zentrums (Cp) und des Radius (Rp) der Pupille (P) im Bild, zum Erkennen von Positionen von Intensitätssprüngen von Pixels, die sich auf einer Linie (Cp,x) befinden, im Wesentlichen das geschätzte Zentrum der Pupille und Übergangszonen zwischen der Iris (IR) und der Hornhaut (CR) durchquerend, und dies beiderseitig der Pupille, und zum Bestimmen des Radius (Ri) eines Kreises, der im Wesentlichen am geschätzten Zentrum der Pupille zentriert ist und die erkannten Positionen der Intensitätssprünge durchquert,
**dadurch gekennzeichnet, dass** sie konfiguriert ist zum Erkennen der Positionen der Intensitätssprünge (TCI, TIP, TPI, TIC) durch das Suchen von Positionen in denen ein Gradientenfilter, der zwischen zwei sukzessiven türartigen mobilen Fenstern, die sich überdecken, an die Intensitäten der Pixels, die sich auf der Linie (Cp,x) befinden, angewandt wird, lokal ein Extremum aufweist.

16. Vorrichtung nach Anspruch 15, konfiguriert zum Bestimmen des Radius (Ri) der Iris durch Berechnen der Distanz zwischen der Position ($\hat{x}$) des Zentrums (Cp) der Pupille auf der Linie (Cp,x) und einer der Positionen der Intensitätssprünge (m3, m4) auf der Linie (Cp,x), in der linken und in der rechten Übergangszone zwischen der Hornhaut und der Iris (TCI, TIC).

17. Vorrichtung nach einem der Ansprüche 15 und 16, konfiguriert zum Bestimmen der Positionen der Intensitätssprünge (m2, m4) auf der Linie (Cp,x) in der linken und in der rechten Übergangszone zwischen der Hornhaut und der Iris (TCI, TIC) durch das Suchen von zwei Positionen, in denen der Wert des Gradientenfilters (G(m)) lokal ein Extremum aufweist.

18. Vorrichtung nach einem der Ansprüche 15 bis 17, konfiguriert zum Berechnen des Gradientenfilters (G(m)) auf folgende Art und Weise:

$$G(m) = \frac{1}{\Delta x} \sum_{x \in \Pi_m} I(x) - \frac{1}{\Delta x} \sum_{x \in \Pi_{m-1}} I(x)$$

in der I(x) die Intensität eines Pixels in der Position x darstellt, m und m-1 die Position des Zentrums der türartigen mobilen Fenster $\Pi_m$ (x) und $\Pi_{m-1}$ (x) darstellen, und $\Delta$x die Breite der mobilen Fenster darstellt.

19. Vorrichtung nach einem der Ansprüche 15 bis 18, in der die Breite der mobilen Fenster ($\Pi$m(x)) 16 Pixels gleich kommt und der Verschiebungsschritt der mobilen Fenster auf 4 Pixels festgelegt ist.

20. Vorrichtung nach einem der Ansprüche 15 bis 19, konfiguriert zum Bestimmen des Radius der Iris (Ri) durch Suchen der Positionen (m2 und m4) in denen der Gradientenfilter (G(m2), G(m4)) lokal ein Extremum in den Übergangszonen (TCI, TIC) zwischen der Iris (IR) und der Hornhaut (CR) aufweist, durch das Berechnen der Distanzen (Ri1, R12) zwischen der Position ($\hat{x}$) des Zentrums der Pupille auf der Linie (Cp,x) und den Positionen (m2, m4) in denen der Gradientenfilter lokal ein Extremum aufweist, wobei der Radius der Iris geschätzt ist gleich der Distanz (Ri1 oder Ri2) mit der Position (m2 oder m4) in der der Wert des Gradientenfilters (G(m2), G(m4)) als absoluter Wert am höchsten ist, wenn die Distanzen (Ri1, Ri2) nah sind, und ansonsten der Radius der Iris geschätzt ist gleich der Distanz (Ri1 oder Ri2) mit der Position (m2 oder m4) in der der Wert des Gradientenfilters als absoluter Wert am niedrigsten ist.

21. Vorrichtung nach einem der Ansprüche 15 bis 20, konfiguriert zum Verfeinern der Position des Zentrums (Ci) und des Wertes des Radius (Ri) der Iris (IR) durch einen Integro-Differential-Operator, der an die Position des Zentrums der Pupille (Cp) und einen geschätzten Wert des Radius der Iris (Ri) angewandt wird.

22. Vorrichtung nach einem der Ansprüche 15 bis 21, konfiguriert zum Lokalisieren der Pupille (P) durch eine Segmentierung des Bildes, um die Kontur der Pupille (P) abzugrenzen, mit anschließendem Schätzen des Zentrums (Cp) der Pupille durch eine Berechnung des geometrischen Zentrums der Kontur der Pupille.

23. Vorrichtung nach Anspruch 22, konfiguriert zum Berechnen des Radius Rp der Pupille durch den folgenden Ausdruck:

$$Rp = max(w,h)$$

wo $w = \left(\dfrac{4}{\pi}\right)^{1/4}\left(\dfrac{\phi_2^3}{\phi_1}\right)^{1/8}$ und $h = \left(\dfrac{4}{\pi}\right)^{1/4}\left(\dfrac{\phi_1^3}{\phi_2}\right)^{1/8}$

mit $\phi_1 = \displaystyle\sum_{ROIP}(x - \hat{x})^2$ und $\phi_2 = \displaystyle\sum_{ROIP}(y - \hat{y})^2$

wobei x, y die Koordinaten der Pixels in der Suchzone ROIP sind, und $\hat{x}, \hat{y}$ die Koordinaten des Zentrums (Cp) der Pupille sind.

24. Vorrichtung nach Anspruch 23, konfiguriert zum Verfeinern des Wertes des Radius (Rp) der Pupille durch einen Integro-Differential-Operator.

25. Vorrichtung nach einem der Ansprüche 15 bis 24, konfiguriert zum Vorverarbeiten des Bildes durch das Ausführen einer Filterung der Intensitäten der Pixels des Bildes, um die Wimpern auf der Hornhaut und der Iris sowie die Reflexe auf der Pupille zu beseitigen.

26. Vorrichtung nach Anspruch 25, in der die Filterung durch das Anwenden von Vorgängen des morphologischen Schließens und Öffnens an die Intensitäten der Pixels des Bildes ausgeführt wird.

27. Vorrichtung nach einem der Ansprüche 25 und 26, in der die Vorverarbeitung des Bildes durch das Anwenden einer Verarbeitung der Kontrasterhöhung an die Intensitäten der Pixels des Bildes ausgeführt wird.

28. Vorrichtung nach Anspruch 27, konfiguriert zum Erhöhen des Kontrastes des Bildes nur in einer Zone des Bildes (ROIP) in der angenommen wird, dass sich dort die Pupille befindet.

Fig. 1

Fig. 2

Fig. 3a

Fig. 3b

Fig. 4

Fig. 5a

Fig. 5b

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1764740 A

**Littérature non-brevet citée dans la description**

- The Algorithm of Iris Image Preprocessing. **P. Lili ; X. Mei.** Fourth IEEE Workshop on Automatic Identification Advanced Technologies. 17 Octobre 2005, 134-138
- **J.G. DAUGMAN.** High confidence visual recognition of persons by a test of statistical independence. *IEEE Transactions on Pattern Analysis and Machine Intelligence,* 1993, vol. 15 (11), 1148-1161
- **J.DAUGMAN.** High confidence personal identification by rapid video analysis of iris texture. *IEEE Conf. Publication, n˚408, European convention on security and détection,* 16 Mai 1995
- **C.L. TISSE ; L. MARTIN ; L. TORRES ; M. ROBERT.** Person identification technique using human iris recognition. *The 15th International Conference on Vision Interface,* 27 Mai 2002, vol. S6.1, 294-300